# EUROPEAN PATENT SPECIFICATION

(11) **EP 2 330 773 B1**
(45) Date of publication and mention of the grant of the patent: **04.01.2017**
(21) Application number: 09306138.0
(22) Date of filing: 25.11.2009
(51) Int. Cl.: H04L 12/12, H04M 11/06

(54) **Method for waking up a customer premises equipment, central office, network terminating unit and customer premises equipment for an access network**
Verfahren zum Aufwecken eines Kundenendgerätes, Zentralbüro, Netzwerkabschlusseinheit und Kundenendgerät für ein Zugangsnetzwerk
Procédé pour réveiller un équipement dans les locaux du client, bureau central, unité de terminaison de réseau et équipement dans les locaux du client pour un réseau d'accès

(43) Date of publication of application: 08.06.2011
(73) Proprietor: ALCATEL LUCENT, 92100 Boulogne-Billancourt (FR)
(72) Inventor: Hehmann, Joerg, 71263 Weil der Stadt (DE); Schmuck, Harald, 71701 Schwieberdingen (DE); Straub, Michael, 75433 Maulbronn (DE)
(74) Representative: Wetzel, Emmanuelle

(56) References cited:
- US-A1- 2003 068 024
- US-A1- 2005 254 515

## Description

The invention relates to a method for waking up a customer premises equipment being in a sleep mode, according to the preamble of claim 1, to a network terminating unit according to the preamble of claim 4, and to a customer premises equipment according to the preamble of claim 5.

Saving of energy nowadays is a widespread demand, also known under the catchword green technology, especially "Green IT" in our field. Most of the elements in a telecommunication's network are more or less continuously powered, though at least those in the customer's field are being used only from time to time.

The switching between an operating mode and a sleep mode, where the sleep mode shows a reduced scope of service with reduced energy consumption, is no problem from the side of the customer. But waking up such equipment from the network side, when the customer is to be reached from there, is not such easy.

This problem according to the invention is solved by a method for waking up a customer premises equipment being in a sleep mode, according to the teaching of claim 1 by a network terminating unit according to the teaching of claim 4, and by a customer premises equipment according to the teaching of claim 5.

It is to be mentioned here that sleep modes in customer premises equipment and wake-up procedures as such are known, for example from US 2003/0068024 A1 or US 2005/0254515 A1.

The invention is applicable in networks, where at the customer's end both, equipment of the network operator and of the customer is foreseen. The equipment of the network operator, known as network terminating unit, allows the operator to monitor his area of responsibility independent from equipment being in the responsibility of the customer, even regardless of whether such equipment is connected at all or not.

Such network terminating units include means to communicate with the equipment of the network operator in his central office to a small or even very small extend and to perform some remotely controlled actions. The power consumption of such network terminating units is small compared to the power consumption of the connected equipment being in the responsibility of the customer, known as customer premises equipment. There even exist proposals to remotely power such network terminating units from the central office by using opto-electrical converters harvesting the optical communication on an optical transmission line.

The current invention suggests using the property of such network terminating units and to also influence a connected customer premises equipment to operate in the operating mode rather than in the sleep mode.

Further embodiments of the invention are to be found in the subclaims and in the accompanying description.

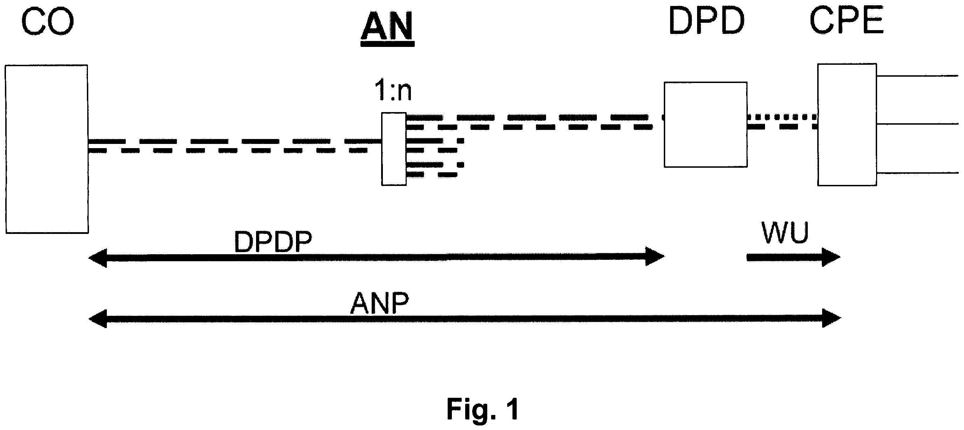

In the following the invention will be described with reference to the accompanying drawing, in which
- Figure 1: shows both, an example of a telecommunication's network with a central office according to the invention, a demarcation point device as an example of a network terminating unit according to the invention, and a customer premises equipment according to the invention, as well as some messages exchanged in a method according to the invention.

The upper part of figure 1 shows a passive optical network as an example of a telecommunication's network, in which the method according to the invention can be performed. This network includes a central office CO, an access network AN, a demarcation point device DPD, and a customer premises equipment CPE. The access network AN mainly consists of one optical data line originating in the central office CO, not labeled, a splitter 1:n, not labeled, and n optical data lines ending at the demarcation point devices DPD, not labeled and only one shown completely. In this figure each physical line is depicted as two parallel logical lines for the communication between central office CO and demarcation point device DPD on the one hand and central office CO and customer premises equipment CPE on the other hand. From the customer premises equipment CPE on three data lines are drawn, not labeled, carrying data for and from different applications.

The messages between the above units are shown in the lower part of figure 1. There are messages DPDP dedicated to the communication between the central office CO and the demarcation point device DPD, messages ANP dedicated to the communication between the central office CO and the customer premises equipment CPE, and a wake up signal WU from the demarcation point device DPD to the customer premises equipment CPE connected thereto.

There is an end-to-end communication ANP, using an access network protocol, between the central office CO and the customer premises equipment CPE normally embedded into the payload traffic on this connection and thus having the same physical properties, especially a high or even very high data rate, depicted with short dashes.

In addition thereto there is communication DPDP between the central office CO and the demarcation point device DPD, using a demarcation point device protocol and being independent from the payload traffic and normally having physical properties depending therefrom, especially a low data rate, depicted with long dashes.

From the demarcation point device DPD an additional data path for a wake-up signal WU extends to the customer premises equipment CPE, depicted as a dotted line. The wake-up signal WU may be an electrical or an optical one. It may be a digital message according to whatever protocol or it may be only a static level maybe for opening or closing a transistor, be it an electrical one or a phototransistor, as part of the power supply for those parts of the customer premises equipment CPE that are allowed to enter the sleep mode.

The central office CO may be any element in an operator's network that is connected to a multiple of subscribers by either a multiple of, in this case mostly electrical, data lines or by an optical network, in this case mostly a tree-shaped one with optical data lines branching in at least one branching point.

Such central office CO, when operating together with network terminating units like the demarcation point devices DPD, anyway includes monitoring means for working together with the network terminating units in order to at least being in position to check in case of an interruption, whether such interruption is in the own responsibility or in the responsibility of the customer. To this end some kind of a minimal protocol is foreseen to switch the network terminating unit between different test cases like open circuited, short circuited, or loop back.

According to the invention such protocol is to be supplemented with a message for waking up a connected customer premises equipment like a SIP phone, a computer, or a server.

Depending on whether the network terminating units anyway are in position to detect normal messages for setting up a connection, no special message for waking up is to be foreseen and such message for setting up a connection may in addition be used in the network terminating units to trigger a wake-up event.

The demarcation point device DPD as an example of a network terminating unit during normal operation acts as a mere transit connection for the payload traffic (short dashes). Effected by the demarcation point device protocol DPDP for monitoring purposes the demarcation point device DPD can be brought in a monitoring mode where it acts in such a way, that the central office can evaluate properties of the access line up to there. A mere opening or closing the normal data path or reflecting back the incoming data is known as such possibility as well as taking whatever measuring values and sending them back to the central office or influencing the spectrum of incoming and reflected back light.

According to the invention such demarcation point device DPD now is to be supplemented such that it can detect a wake-up event from the central office and thereupon influence a customer premises equipment connected thereto to change into normal operating mode. As already mentioned this can be made by a kind of wake-up signal WU that may be an electrical or an optical one. It may be a digital message according to whatever protocol or it may be only a static level maybe for opening or closing a transistor, be it an electrical one or a phototransistor, as part of the power supply for those parts of the customer premises equipment CPE that are allowed to enter the sleep mode.

The customer premises equipment CPE in principle is to be built such that it is divided in two parts, one being used only in normal operating mode, and the other being used also in the sleep mode. The part to be used in normal operating mode is whatever customer premises equipment as such apart from elements like a clock that must not be interrupted and maybe work with a buffer battery. The part to be used also in the sleep mode may be such elements like a clock and include a switch for taking into operation the rest of the customer premises equipment CPE. The already mentioned transistor as part of the power supply is an example of such switch.

## Claims

1. Method for waking up a customer premises equipment (CPE) being in a sleep mode, where the customer premises equipment (CPE) is part of a telecommunication's network with a central office (CO), an access network (AN), a plurality of network terminating units (DPD) and customer premises equipment (CPE) connected to one of said network terminating units (DPD), where the customer premises equipment (CPE) is a separate unit external to the one network terminating unit (DPD) to which it is connected, **characterized in that** the network terminating unit (DPD) connected to the customer premises equipment (CPE) to be wakened receives a signal (DPDP) from the central office (CO) and the network terminating unit (DPD) connected to the customer premises equipment (CPE) thereupon causes (WU) the customer premises equipment (CPE) to change from the sleep mode to an operating mode.

2. Method according to claim 1, **characterized in that** the signal (DPDP) is a specific signal dedicated to waking up a customer premises equipment.

3. Method according to claim 1, **characterized in that** the signal (DPDP) is a signal dedicated to setting up a connection.

4. Network terminating unit (DPD) for a telecommunication's network with a central office (CO), an access network (AN), a plurality of network terminating units (DPD) and customer premises equipment (CPE) connected to one of said network terminating units (DPD), where the customer premises equipment (CPE) is a separate unit external to the one network terminating unit (DPD) to which it is connected, **characterized in that** the network terminating unit (DPD) is built such that it causes the customer premises equipment (CPE) connected thereto to change from a sleep mode to an operating mode at a signal (DPDP) received from the central office (CO).

5. Customer premises equipment (CPE) for a telecommunications network with a central office (CO), an access network (AN), a plurality of network terminating units (DPD) and customer premises equipment (CPE) connected to one of said network terminating units (DPD), where the customer premises equipment (CPE) a separate unit external to the one network terminating unit (DPD) to which it is connected, where the customer premises equipment (CPE) is built such that it changes between an operating mode and a sleep mode, where the sleep mode shows a reduced scope of service with reduced energy consumption, **characterized in that** the customer premises equipment (CPE) further is built such that causing the change from a sleep mode to an operating mode is performed by the network terminating unit (DPD) connected to it.

## Patentansprüche

1. Verfahren zum Wecken eines Endgeräts (Customer Premises Equipment, CPE), das sich in einem Schlafmodus befindet, wobei das Endgerät (CPE) Teil eines Telekommunikationsnetzwerks mit einer Zentrale (Central Office, CO), einem Zugangsnetzwerk (Access Network, AN), einer Vielzahl von Netzwerkabschlusseinheiten (DPD) und dem mit einer der besagten Netzwerkabschlusseinheiten (DPD) verbundenen Endgerät (CPE) ist, wobei das Endgerät (CPE) eine getrennte Einheit ist, die sich extern von der einen Netzwerkabschlusseinheit (DPD) befindet, an die es abgeschossen ist, **dadurch gekennzeichnet, dass** die Netzwerkabschlusseinheit (DPD), die mit dem zu weckenden Endgerät (CPE) verbunden ist, ein Signal (DPDP) von der Zentrale (CO) empfängt und die mit dem Endgerät (CPE) verbundene Netzwerkabschlusseinheit (DPD) daraufhin das Endgerät (CPE) veranlasst (WU), vom Schlafmodus in den Betriebsmodus zu wechseln.

2. Verfahren nach Anspruch 1, **dadurch gekennzeichnet, dass** das Signal (DPDP) ein spezifisches Signal ist, das dafür bestimmt ist, ein Endgerät zu wecken.

3. Verfahren nach Anspruch 1, dadurch gekenntzeichnet, dass das Signal (DPDP) ein Signal ist, das dafür bestimmt ist, eine Verbindung aufzubauen.

4. Netzwerkabschlusseinheit (DPD) für ein Telekommunikationsnetzwerk mit einer Zentrale (CO), einem Zugangsnetzwerk (AN), einer Vielzahl von Netzwerkabschlusseinheiten (DPD) und einem mit einer der besagten Netzwerkabschlusseinheiten (DPD) verbundenen Endgerät (CPE), wobei das Endgerät (CPE) eine separate Einheit ist, die sich extern von der einen Netzwerkabschlusseinheit (DPD) befindet, mit der es verbunden ist,
**dadurch gekennzeichnet, dass** die Netzwerkabschlusseinheit (DPD) dergestalt aufgebaut ist, dass sie das Endgerät (CPE) dazu veranlasst, auf den Empfang eines Signals (DPDP) von der Zentrale (CO) hin von einem Schlafmodus in einen Betriebsmodus zu wechseln.

5. Endgerät (CPE) für ein Telekommunikationsnetzwerk mit einer Zentrale (CO), einem Zugangsnetzwerk (AN), einer Vielzahl von Netzwerkabschlusseinheiten (DPD) und einem mit einer der besagten Netzwerkabschlusseinheiten (DPD) verbundenen Endgerät (CPE), wobei das Endgerät (CPE) eine separate Einheit ist, die sich extern von der einen Netzwerkabschlusseinheit (DPD) befindet, mit der es verbunden ist, wobei das Endgerät (CPE) dergestalt aufgebaut ist, dass es zwischen einem Betriebsmodus und einem Schlafmodus wechselt, wobei der Schlafmodus einen reduzierten Leistungsumfang mit reduziertem Energieverbrauch aufweist,
**dadurch gekennzeichnet, dass** das Endgerät (CPE) weiterhin so aufgebaut ist, dass der Wechsel vom Schlafmodus in den Betriebsmodus von der Netzwerkabschlusseinheit (DPD) ausgeführt wird, mit der es verbunden ist.

## Revendications

1. Procédé destiné à réveiller un équipement d'installation d'abonné (CPE) qui est en mode veille, dans lequel l'équipement d'installation d'abonné (CPE) fait partie d'un réseau de télécommunications avec un central téléphonique (CO), un réseau d'accès (AN), une pluralité d'unités de terminaison de réseau (DPD) et un équipement d'installation d'abonné (CPE) connecté à l'une desdites unités de terminaison de réseau (DPD), dans lequel l'équipement d'installation d'abonné (CPE) est une unité distincte extérieure à l'unité de terminaison de réseau (DPD) à laquelle il est connecté, **caractérisé en ce que** l'unité de terminaison de réseau (DPD) connectée à l'équipement d'installation d'abonné (CPE) à réveiller reçoit un signal (DPDP) en provenance du central téléphonique (CO) et l'unité de terminaison de réseau (DPD) connectée à l'équipement d'installation d'abonné (CPE) provoque (WU) alors le passage de l'équipement d'installation d'abonné (CPE) du mode veille à un mode de fonctionnement.

2. Procédé selon la revendication 1, **caractérisé en ce que** le signal (DPDP) est un signal spécifique dédié au réveil d'un équipement d'installation d'abonné.

3. Procédé selon la revendication 1, **caractérisé en ce que** le signal (DPDP) est un signal dédié à l'établissement d'une connexion.

4. Unité de terminaison de réseau (DPD) destinée à un réseau de télécommunications avec un central téléphonique (CO), un réseau d'accès (AN), une pluralité d'unités de terminaison de réseau (DPD) et un équipement d'installation d'abonné (CPE) connecté à l'une desdites unités de terminaison de réseau (DPD), où l'équipement d'installation d'abonné (CPE) est une unité distincte extérieure à l'unité de terminaison de réseau (DPD) à laquelle il est connecté, **caractérisé en ce que** l'unité de terminaison de réseau (DPD) est construite de façon à provoquer le passage de l'équipement d'installation d'abonné (CPE) qui lui est connecté du mode veille à un mode de fonctionnement en réponse à un signal (DPDP) reçu du central téléphonique (CO).

5. Équipement d'installation d'abonné (CPE) destiné à un réseau de télécommunications avec un central téléphonique (CO), un réseau d'accès (AN), une pluralité d'unités de terminaison de réseau (DPD) et un équipement d'installation d'abonné (CPE) connecté à l'une desdites unités de terminaison de réseau (DPD), où l'équipement d'installation d'abonné (CPE) est une unité distincte extérieure à l'unité de terminaison de réseau (DPD) à laquelle il est connecté, où l'équipement d'installation d'abonné (CPE) est construit de façon à basculer entre un mode de fonctionnement et un mode veille, où le mode veille présente une étendue de service limitée avec une consommation d'énergie réduite, **caractérisé en ce que** l'équipement d'installation d'abonné (CPE) est en outre construit de sorte que le déclenchement du passage du mode veille à un mode de fonctionnement est réalisé par l'unité de terminaison de réseau (DPD) qui lui est connectée.
